Europäisches Patentamt

European Patent Office

Office européen des brevets

(19)

(11) Veröffentlichungsnummer: **0 064 655**
**B1**

(12) **EUROPÄISCHE PATENTSCHRIFT**

(45) Veröffentlichungstag der Patentschrift:
**26.08.87**

(51) Int. Cl.⁴: **H 01 M 10/39,** H 01 M 10/42, H 01 H 83/08

(21) Anmeldenummer: **82103505.2**

(22) Anmeldetag: **26.04.82**

(54) **Überbrückungselement.**

(30) Priorität: **02.05.81 DE 3117385**

(43) Veröffentlichungstag der Anmeldung:
**17.11.82 Patentblatt 82/46**

(45) Bekanntmachung des Hinweises auf die Patenterteilung:
**26.08.87 Patentblatt 87/35**

(84) Benannte Vertragsstaaten:
**BE FR GB IT NL**

(56) Entgegenhaltungen:
**FR - A - 1 012 395**
**GB - A - 336 844**
**US - A - 3 575 722**
**US - A - 4 124 739**
**US - A - 4 252 869**

(73) Patentinhaber: **BROWN, BOVERI & CIE Aktiengesellschaft, Kallstadter Strasse 1, D-6800 Mannheim 31 (DE)**

(72) Erfinder: **Fischer, Wilfried, Dr. Dipl.-Phys., Am Kastanienberg 27, D-6930 Neckargemünd (DE)**

(74) Vertreter: **Kempe, Wolfgang, Dr. et al, c/o BROWN, BOVERI & CIE AG ZPT Postfach 351, D-6800 Mannheim 31 (DE)**

## Beschreibung

Die Erfindung bezieht sich auf ein Überbrückungselement gemäss dem Oberbegriff des Patentanspruches 1.

Solche Überbrückungselemente finden vor allem in Hochtemperaturbatterien eine Anwendung, die aus elektrochemischen Speicherzellen auf der Basis von Alkalimetall und Chalkogen zusammengesetzt sind. Sie dienen hierbei der elektrischen Überbrückung von zerstörten Speicherzellen, die auf diese Weise aus dem Stromkreis der Hochtemperaturbatterie herausgetrennt werden können, wodurch die Funktionsfähigkeit der Hochtemperaturbatterie im wesentlichen erhalten bleibt.

Hochtemperaturbatterien, die aus elektrochemischen Speicherzellen aufgebaut sind, werden in Zukunft in vermehrtem Masse für den Elektroantrieb von Fahrzeugen eingesetzt.

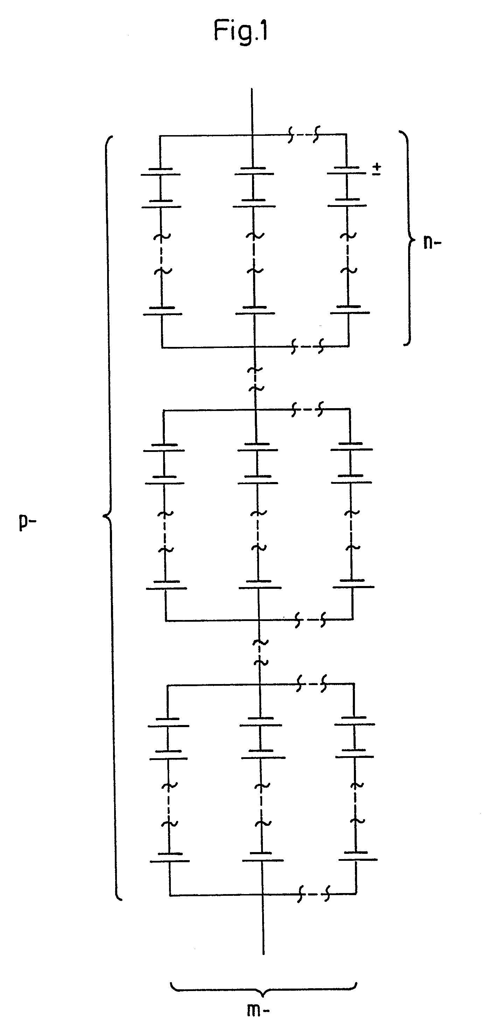

Bei solchen Fahrzeugbatterien besteht die Notwendigkeit, viele elektrochemische Speicherzellen in Serie und nur wenige Speicherzellen parallel zu schalten. Gründe hierfür sind dadurch gegeben, dass der Energieinhalt einer solchen Batterie im allgemeinen kleiner als 40 kWh sein wird, der Energieinhalt einer einzelnen Speicherzelle wird jedoch grösser sein als 80 Wh. Daraus folgt, dass eine Fahrzeugbatterie nicht mehr als 500 Speicherzellen enthalten wird. Falls mit einer solchen Batterie bei einer Spannung der Einzelspeicherzelle von etwa 2 Volt insgesamt 200 Volt erzeugt werden sollen, müssen 100 Speicherzellen in Serie geschaltet werden. Das bedeutet, dass höchstens 5 Speicherzellen parallel geschaltet werden können. Da die Redundanz bei 5 parallel geschalteten Speicherzellen noch nicht sehr gross ist, ist es zweckmässig, möglichst viele Speicherzellen in Serie zu schalten. Derartige Zweige können dann parallel geschaltet werden, so dass sich das in Fig. 1 dargestellte Schaltschema ergibt. Die Speicherzellen sind in dieser Zeichnung nur durch ihre elektrischen Anschlusspole dargestellt. Wie anhand dieser Zeichnung zu sehen ist, sind jeweils n Speicherzellen zu einem Zweig serienartig zusammengeschaltet, m Zweige mit jeweils n Speicherzellen sind parallel geschaltet und bilden einen Block. Die gesamte Batterie ist aus p solchen seriengeschalteten Blöcken zusammengesetzt. Sie enthält gemäss dem in Fig. 1 gezeigten Beispiel n × m × p Speicherzellen.

Probleme treten bei der beschriebenen Schaltung dann auf, wenn eine Speicherzelle defekt wird. Bei Natrium/Schwefel-Speicherzellen hat es sich gezeigt, dass ein Defekt meist dadurch auftritt, dass der Festelektrolyt mit der Zeit Risse bekommt, so dass die Reaktionsstoffe Natrium und Schwefel chemisch miteinander direkt reagieren können und von der Speicherzelle keine Spannung mehr abgegeben wird. Eine solche defekte Speicherzelle weist einen unendlich grossen Widerstand auf, der meist um mehr als einen Faktor 2 grösser ist als der ohmsche Widerstand einer intakten Speicherzelle. Die Folge hiervon ist, dass durch den Zweig mit der defekten Speicherzelle ein geringerer Lade- oder Entladestrom fliesst. Ist der Widerstand der defekten Speicherzelle sehr gross, so tragen praktisch nur noch m − 1 Zweige der Batterie zur Kapazität bei. Dies bedeutet, dass die Kapazität der Gesamtbatterie unter diesen Bedingungen um den Faktor (m − 1)/m kleiner ist als diejenige einer intakten Batterie.

Aus der US-PS 4 252 869 ist ein Überbrückungselement für elektrochemische Speicherzellen bekannt. Das Überbrückungselement weist zwei elektrische Leiter auf, welche an die Anschlusspole der Speicherzellen anzuschliessen sind. Ferner ist das Überbrückungselement mit einem Gefäss ausgerüstet, innerhalb dessen ein Metall eingefüllt ist. Um den Behälter ist eine Heizwendel angeordnet, deren elektrische Anschlusselemente an die beiden elektrischen Leiter des Überbrückungselements angeschlossen sind. Wird die Speicherzelle, an die das Überbrückungselement angeschlossen ist, hochohmig, so wird der gesamte Strom, der normalerweise durch die Speicherzelle fliesst von dem Überbrückungselement übernommen. Da dieser Strom sehr gross ist, wird das Metall, das innerhalb des Behälters angeordnet ist, erhitzt und dadurch flüssig. Gleichzeitig dehnt sich das Metall aus und bringt den Behälter, in dem es angeordnet ist, zum Bersten. Dadurch kann das flüssig gewordene Metall in einen Spalt ausfliessen, der, wenn er mit dem Metall ausgefüllt ist, die beiden elektrischen Leiter des Überbrückungselements verbindet.

Aus der US-PS 4 124 739 ist eine elektrochemische Speicherzelle bekannt, zwischen deren Anoden- und Kathodenraum ein Überbrückungselement vorgesehen ist. Dieses wird durch zwei elektrische Leiter gebildet, die über einen ohmschen Widerstand miteinander verbunden sind. Ein erster Leiter ragt in den Kathodenraum, während der zweite Leiter in den Anodenraum hineingeführt ist. Mit Hilfe dieser Anordnung wird erreicht, dass die Speicherzelle nur auf eine maximale Kapazität aufgeladen und erst beim Erreichen einer Ruhespannung entladen wird.

Der Erfindung liegt deshalb die Aufgabe zugrunde, ein Überbrückungselement für eine elektrochemische Speicherzelle oder eine Gruppe von parallel geschalteten Speicherzellen zu schaffen, dessen ohmscher Innenwiderstand bei intakter(n) Speicherzelle(n) sehr gross ist, der jedoch beim Auftreten eines Defekts an einer Speicherzelle sehr klein wird, und die Möglichkeit bietet, den Stromkreis durch diese Speicherzelle beziehungsweise durch die Gruppe der parallel geschalteten Speicherzellen beliebig lang zu überbrücken.

Diese Aufgabe wird erfindungsgemäss durch die kennzeichnenden Merkmale des Patentanspruches 1 gelöst.

Weitere Lösungen der Aufgabe sind in den Patentansprüchen 2 und 3 offenbart.

Die Erfindung wird nachfolgend anhand von Zeichnungen erläutert.

Es zeigen:

Fig. 1 den schematischen Aufbau einer Hochtemperaturbatterie,

Fig. 2 ein Überbrückungselement, das einer elektrochemischen Speicherzelle parallel geschaltet ist,

Fig. 3 ein weiteres Überbrückungselement,

Fig. 4 eine Variante des erfindungsgemässen Überbrückungselementes.

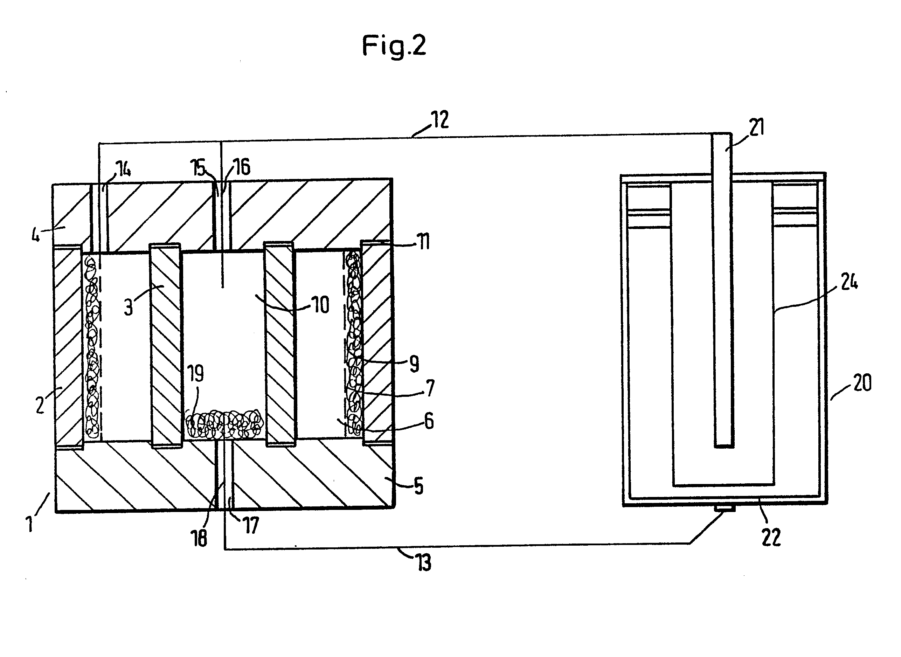

Das in Fig. 2 gezeigte Überbrückungselement 1 wird im wesentlichen aus zwei Zylindern 2 und 3, die aus Beta-Beta''-Aluminiumoxid bestehen, und zwei Scheiben aus Aluminiumoxid 4 und 5 gebildet. Die beiden Zylinder 2 und 3 weisen unterschiedliche Durchmesser auf. Der Zylinder 3 mit dem kleineren Durchmesser ist konzentrisch innerhalb des Zylinders 2 angeordnet. Die Durchmesser der beiden Zylinder sind so gewählt, dass zwischen ihnen ein Ringraum 6 verbleibt, dessen Volumen etwa dem Innenvolumen des Zylinders 3 entspricht. In einem vorgebbaren Abstand von den inneren Begrenzungsflächen des Zylinders 2 ist innerhalb des Raumes 6 ein Metallnetz 7 rundum aufgespannt, das die Innenflächen des Zylinders 2 überdeckt.

Zwischen diesem Metallnetz 7 und der inneren Begrenzungsfläche des Zylinders 2 ist ein Metallfilz 9 angeordnet. Anstelle des Metallfilzes 9 kann auch eine Metallwolle verwendet werden. Der Innenbereich des Zylinders 3 bildet den zweiten Raum 10 des Überbrückungselementes 1. Die beiden Zylinder 2 und 3 weisen die gleiche Höhe auf und sind beidseitig an ihren Enden durch jeweils eine gemeinsame Aluminiumoxid-Scheibe 4, 5 hermetisch gegeneinander und nach aussen hin verschlossen. Die Verbindung zwischen den Zylindern 2 und 3 und den beiden Aluminiumoxid-Scheiben 4 und 5 erfolgt über ein spezielles Glas 11. Das Überbrückungselement 1 ist für die elektrisch leitende Verbindung mit einer Speicherzelle mit zwei Elektroden 12 und 13 versehen. Die Aluminiumoxid-Scheibe 4 ist im Bereich des Raumes 6 mit einer Durchführung 14 versehen, über die das Metallnetz 7 mit der ersten Elektrode 12 des Überbrückungselementes 1 elektrisch leitend verbunden ist. Die Aluminiumoxid-Scheibe 4 ist mit einer zweiten Durchführung im Bereich des Raumes 10 versehen. Durch diese Durchführung 15 ist eine Kontaktfläche 16 hindurchgesteckt, die in den Raum 10 hineinragt. Die zweite Aluminiumoxid-Scheibe 5 ist ebenfalls im Bereich des Raumes 10 mit einer Durchführung 17 versehen, durch die eine zweite Kontaktfläche 18 geführt ist, die ebenfalls in den zweiten Raum 10 des Überbrückungselementes 1 hineinragt. Die Kontaktfläche 18 ist von einem Metallfilz 19 umgeben, der einen engen Kontakt mit den inneren Begrenzungsflächen des Zylinders 3 und mit der Kontaktfläche 18 aufweist. Die Kontaktfläche 18 ist elektrisch leitend mit der zweiten Elektrode 13 des Überbrückungselementes 1 verbunden. Alle Durchführungen 14, 15 und 17 der beiden Aluminiumoxid-Scheiben 4 und 5 werden nach dem Hindurchführen der elektrischen Verbindungen beziehungsweise Kontaktflächen wieder hermetisch verschlossen. Die beiden Elektroden 12 und 13 des Überbrückungselementes 1 werden mit den beiden Stromabnehmern einer Speicherzelle 20 elektrisch leitend verbunden, so dass das Überbrückungselement der Speicherzelle parallel geschaltet ist. Insbesondere wird die erste Elektrode 12 mit dem anodischen Stromabnehmer 21 und die Elektrode 13 mit dem kathodischen Stromabnehmer 22 verbunden. Vor dem Einsatz des Überbrückungselementes 1 in einer Batterie wird der Raum 6 noch mit einem Metall, insbesondere einem solchen, das bei 350 °C flüssig ist, ausgefüllt. Bei diesem Beispiel wird wie bereits oben erwähnt Natrium verwendet. Das Füllen des Raumes 6 mit dem Natrium kann dadurch erfolgen, dass das Natrium durch den Beta/Beta''-Aluminiumoxid-Zylinder 2 in den Raum 6 hineinelektrolysiert wird. In Fig. 2 ist das erfindungsgemässe Überbrückungselement der schematisch dargestellten Speicherzelle 20 parallel geschaltet. Die Speicherzelle 20 umfasst im wesentlichen ein becherförmiges Gehäuse 22 aus Metall, das auf seinen Innenflächen einen Korrosionsschutz trägt. Innerhalb des Gehäuses 22 ist ein einseitig geschlossenes Rohr 24 aus Beta-Aluminiumoxid angeordnet. Die Abmessungen dieses Festelektrolyten sind so gewählt, dass zwischen ihm und den inneren Begrenzungsflächen des becherförmigen Metallgehäuses 22 allseitig ein Zwischenraum verbleibt. Dieser dient als Kathodenraum und ist mit Schwefel ausgefüllt. Das Innere des Festelektrolyten 24 dient als Anodenraum und ist mit flüssigem Natrium gefüllt. Das metallische Gehäuse 22 der Speicherzelle 20 dient als kathodischer Stromabnehmer. An ihn ist die Elektrode 13 des Überbrückungselementes 1 angeschlossen. Der anodische Stromabnehmer 21 wird vorzugsweise durch einen gegen Natrium beständigen Metallstab gebildet, der in den Anodenraum hineinragt und über den Verschluss der Speicherzelle 20 geringfügig nach aussen übersteht.

Er ist in herkömmlicher Weise mit der ersten Elektrode 12 des Überbrückungselementes 1 elektrisch leitend verbunden.

Nachfolgend wird die Wirkungsweise des erfindungsgemässen Überbrückungselementes beschrieben. Im normalen Betrieb der Natrium/Schwefel-Speicherzelle 20, die beispielsweise innerhalb eines Zweiges von n in Serie geschalteten Natrium/Schwefel-Speicherzellen einer Batterie angeordnet ist, bleibt das ihr parallel geschaltete Überbrückungselement 1 ohne Wirkung. Die am Überbrückungselement anliegende Spannung versucht das Natrium von dem Raum 10 in den Raum 6 zu befördern, wo sich ohnehin das gesamte Natrium befindet. Der ohmsche Widerstand des Überbrückungselementes 1 ist in diesem Zustand praktisch unendlich gross. Kommt es dagegen bei der Natrium/Schwefel-Speicherzelle 20 zu einem Bruch des Festelektrolyten, so verliert diese die Eigenschaft einer aktiven Speicherzelle, das heisst, ihre Ruhespannung wird zu Null. Das bedeutet, dass an der defekten Speicherzelle beim Entladen des Zweiges der Batterie, in den diese Speicherzelle eingeschaltet ist, insbesondere an ihren Stromabnehmern eine Spannung in umgekehrter Richtung auftritt. Wie bereits oben erwähnt, ist das Überbrückungselement 1 dieser Speicherzelle parallel geschaltet. Damit tritt auch an seinen beiden Elektroden 12 und 13 eine Umkehr der Spannungsrichtung auf. Diese Spannungsumkehr am Überbrückungselement 1 bewirkt den Transport des Natriums aus dem Raum 6 in den zweiten Raum 10 des Überbrückungselementes. Ist dieser Raum 10 vollständig mit Natrium gefüllt, so werden die beiden in diesen Raum hineinragenden Kontaktflächen 16 und 18 der beiden Elektroden 12 und 13 über das Natrium elektrisch leitend miteinander verbunden. Damit wird die defekte Speicherzelle aus dem Stromkreis des Zweiges, in den sie eingeschaltet ist, herausgetrennt. Bei dem hier beschriebenen Überbrückungselement ist es möglich, dass der Kontakt zwischen dem Natrium und der Kontaktfläche 16 der ersten Elektrode 12 durch Vibration zeitweise verlorengeht. Dies ist insofern ohne Bedeutung, alsdann der Natriumtransport auf die oben beschriebene Weise wieder einsetzt, bis der Kontakt wieder hergestellt ist. Wird die Kontaktfläche bei der Wiederherstellung mit einem nicht leitenden Überzug verbunden, der sich nach einiger Zeit in flüssigem Natrium löst und damit den Kontakt freigibt, kann diese Schwierigkeit beseitigt werden. Durch diese Massnahme wird der Natriumtransport in den Raum 10 so lange fortgesetzt, bis sich ein über dem unteren Rand der Kontaktfläche stehender Natriumpegel eingestellt, und die Schutzschicht auf der Kontaktfläche abgelöst hat.

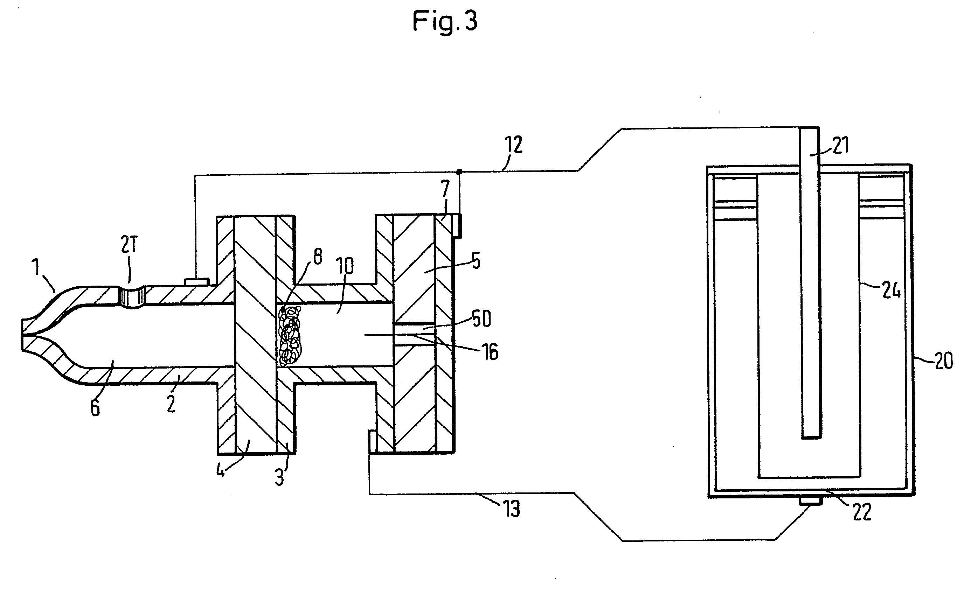

Fig. 3 zeigt ebenfalls ein Überbrückungselement 1 für eine Natrium/Schwefel-Speicherzelle. Auch dieses Überbrückungselement 1 weist zwei Räume 6 und 10 auf, die durch eine alkaliionenleitende Wand voneinander getrennt sind. Die beiden Räume 6 und 10 werden jeweils durch zwei Zylinder 2 und 3 begrenzt, die aus Aluminium gefertigt sind. Der den ersten Raum 6 bildende Aluminium-Zylinder weist an seinem ersten Ende einen nach aussen gerichteten Flansch 2F. Gegen diesen Flansch ist eine Scheibe aus Beta/Beta''-Aluminiumoxid 4 gesetzt, die den Innenbereich des Raumes 6 an diesem Ende verschliesst. Am zweiten Ende dieses Zylinders 2 sind die Wandungen zusammengequetscht und zur Bildung eines hermetischen Verschlusses miteinander verschweisst. Der Zylinder 2 ist hierbei auch mit Natrium gefüllt. Das Verschliessen seines zweiten Endes erfolgt vorzugsweise nach dem Einfüllen des Natriums. Anstelle des Natriums kann auch ein anderes Metall, das die oben beschriebenen Bedingungen erfüllt verwendet werden. Der den zweiten Raum 10 des Überbrückungselementes 1 bildende Aluminium-Zylinder 3 ist an seinen beiden Enden mit jeweils einem nach aussen gerichteten Flansch 3E, 3F, versehen. Der Aluminium-Zylinder 3 schliesst mit seinem ersten Ende direkt an die Beta/Beta''-Aluminiumoxid-Scheibe 4 an, die den Verschluss seines Innenraumes an diesem ersten Ende bildet. Die Durchmesser der beiden Zylinder sind etwa gleich gross. Ihre Längsachsen sind auf einer Gerade liegend angeordnet. Auf den Flansch 3F am zweiten Ende des Aluminium-Zylinders 3 ist eine Aluminiumoxid-Scheibe 5 aufgesetzt, die eine mittige Durchführung 5D aufweist. An diesem zweiten Ende wird der Aluminium-Zylinder 3 durch eine Aluminium-Scheibe 7 verschlossen, die auf der Aluminiumoxid-Scheibe 5 aufsitzt. Die beiden Aluminium-Zylinder 2 und 3 sind mit den sie die gegeneinander abgrenzenden, beziehungsweise verschliessenden Scheiben kraftschlüssig verbunden, wodurch die beiden Räume 6 und 10 nach aussen hin hermetisch verschlossen sind. Zwischen den beiden Räumen besteht aufgrund der Beta/Beta''-Aluminiumoxid-Scheibe 4 ein Durchlass für Alkalimetallionen. Bei der hier beschriebenen Ausführungsform des Überbrückungselementes 1 sind die Aluminium-Zylinder 2 und 3 mit den keramischen Bauteilen über das bereits bekanntgewordene Thermo-Kompressionsverfahren verbunden.

Im Inneren des zweiten Raumes 10 ist bereichsweise ein Metallfilz 8 angeordnet. Dieser steht in engem Kontakt mit der ionenleitenden Scheibe 4 und den inneren Begrenzungsflächen des Aluminium-Zylinders 3. Die erste Elektrode 12 des Überbrückungselementes 1 ist zum einen elektrisch leitend mit der Aussenfläche des Raumes 6 und mit der Aluminium-Scheibe 7 verbunden. An der Aluminium-Scheibe 7 ist eine Kontaktfläche 16 befestigt. Diese ist durch die Durchführung 5D in der Aluminiumoxid-Scheibe 5 hindurchgesteckt und ragt in den Raum 10 hinein. Die zweite Elektrode 13 des Überbrückungselementes ist elektrisch leitend mit der Aussenfläche des Aluminium-Zylinders 3 verbunden. Ebenso wie bei dem in Fig. 2 beschriebenen Ausführungsbeispiel des Überbrückungselementes wird auch hierbei die erste Elektrode mit dem anodischen Stromabnehmer 21 der Natrium/Schwefel-Speicherzelle 20 verbunden, während die zweite Elektrode 13 an den kathodischen Stromabnehmer 22 der Natrium/Schwefel-Speicherzelle angeschlossen ist. Die Funktionsweise dieses Überbrückungselementes 1 entspricht im wesentlichen der Funktionsweise des in Fig. 2 dargestellten und in der dazugehörigen Beschreibung erläuterten Überbrückungselementes 1. Weist die Speicherzelle 20 keinerlei Defekte auf, so ist der ohmsche Innenwiderstand des zu ihr parallel geschalteten Überbrückungselementes 1 unendlich gross. Kommt es zu einer Umpolung der Spannung an der Speicherzelle 20, und damit auch zu einer Umkehr der Spannung an den Elektroden 12 und 13 des Überbrückungselementes 1, so beginnt ein Transport des in dem Raum 6 befindlichen Natriums in den zweiten Raum 10. Der Transport wird dann unterbrochen, wenn sich soviel Natrium innerhalb des Raumes 10 befindet, dass die innere Begrenzungsfläche des Aluminium-Zylinders 3 über das Natrium mit der Kontaktfläche 16 verbunden ist. Durch die Verringerung des Innenwiderstandes bei dem Überbrückungselement 1 wird der Stromkreis durch die Speicherzelle überbrückt und selbige kurzgeschlossen. Wie bereits erwähnt, kann in den Raum 6 anstelle eines flüssigen Metalls auch eine Metallverbindung eingefüllt werden, die zersetzbar ist. Hierfür kommt beispielsweise ein Gemisch aus $NaNO_3$ und $NaNO_2$ infrage. Bei einer Spannungsumkehr an den Elektroden des Überbrückungselementes, nach dem Defektwerden der Speicherzelle wird das Gemisch zersetzt. Es bildet sich Natrium und NO sowie $NO_2$. Das Natrium beziehungsweise die Natriumionen wandern durch die Beta/Beta''-Aluminiumoxid-Scheibe 4 in den Raum 10. Das Stickoxid sammelt sich so lange in dem Raum 6 an, bis der von ihm aufgebaute Druck zum Bersten der in dem Zylinder 2 vorgesehenen Membran 2T führt. Die Membran 2T wird durch eine dünnere Ausbildung der Zylinderwand an dieser Stelle erzeugt.

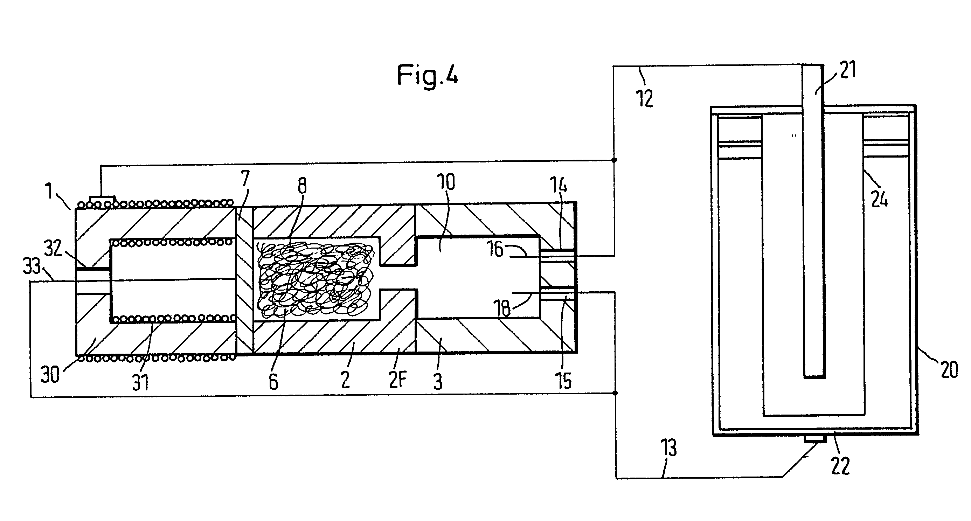

Fig. 4 zeigt eine weitere Ausführungsform eines Überbrückungselementes 1. Dieses umfasst wieder einen Raum 6 und einen Raum 10, die direkt aneinandergrenzen. Der Raum 6 wird durch einen Zylinder 2 aus Aluminiumoxid oder Beta/Beta''-Aluminiumoxid begrenzt. Dieser Zylinder weist an seinem einen Ende einen nach innen gerichteten Flansch 2F auf. Durch diesen Flansch wird der Innenraum dieses Zylinders 2 nur teilweise verschlossen, so dass an diesem Ende eine Öffnung verbleibt. Diese Öffnung kann auch durch eine dünne Membran verschlossen werden. Diese ist so ausgebildet, dass sie mit Hilfe eines Gasüberdruckes zerstört werden kann. An dieses Ende des Zylinders schliesst sich ein einseitig geschlossenes Rohr 3 aus Aluminiumoxid an. Die Öffnung des Rohres 3 ist dem Zylinder 2 zugewandt. An seinem geschlossenen Ende weist das Rohr 3 in vorgebbarem Abstand zwei Durchführungen 14 und 15 auf, durch die zwei Kontaktflächen 16 und 18 gesteckt sind, die in den Raum 10 hineinragen. Die Durchführungen 14 und 15 sind hermetisch verschlossen. Der Zylinder 2 und das Rohr 3 weisen etwa gleiche Innen- und Aussendurchmesser auf. Sie sind so angeordnet, dass ihre Längsachsen auf einer Geraden liegen. Der Innenraum des Zylinders 2 ist mit einem Metallfilz 8 ausgefüllt. Dieser ist mit einem flüssigen Metall oder einer versetzbaren Metallverbindung getränkt.

Falls Natrium als Metall verwendet wird und der Zylinder 2 aus Beta/Beta''-Aluminiumoxid gefertigt ist, kann das Natrium elektrolytisch durch die Zylinderwand 2 eingefüllt werden. Das zweite Ende des Zylinders 2 ist mit einer Aluminium-Scheibe 7 verschlossen. An diese schliesst sich ein einseitig geschlossenes Rohr 30 an. Das Rohr ist vorzugsweise aus einem sauerstoffionenleitenden z. B. mit $Y_2O_3$ stabilisiertem Zirkonoxid hergestellt. Das Rohr 30 ist so angeordnet, dass seine Öffnung der Aluminium-Scheibe 7 zugewandt ist. Der Innen- und Aussendurchmesser des Rohres 30 entspricht in etwa den inneren und äusseren Abmessungen des Zylinders 2. Die Aussen- und Innenflächen des Rohres 30 sind mit einer elektronenleitenden Schicht 31 überzogen. Zur Ausbildung dieser Schicht 31 wird Einbrennplatin oder Silber verwendet. An seinem geschlossenen Ende weist das Rohr 30 eine mittige Durchführung 32 auf, durch die eine Kontaktfläche 33 in das Innere des Rohres 30 geführt ist. Die Kontaktfläche 33 verläuft parallel zur Längsachse des Rohres 30 und erstreckt sich bis zur Aluminium-Scheibe 7. Die erste Elektrode 12 des Überbrückungselementes 1 ist zum einen mit der elektronenleitenden Aussenfläche des Rohres 30 und zum anderen mit der Kontaktfläche 16 verbunden, die in den Raum 10 hineinragt. Die zweite Elektrode des Überbrückungselementes 1 ist elektrisch leitend mit der in den Raum 10 hineinragenden Kontaktfläche 18 und der Kontaktfläche 33 verbunden, die innerhalb des Rohres 30 angeordnet ist.

Die beiden Elektroden des Überbrückungselementes 1 werden wie bei den oben beschriebenen Ausführungsbeispielen an den anodischen beziehungsweise kathodischen Stromabnehmer der Natrium/Schwefel-Speicherzelle 20 angeschlossen. Der ohmsche Widerstand dieses Überbrückungselementes 1 ist unendlich gross, so lange die Natrium/Schwefel-Speicherzelle intakt ist. Kommt es zu einer Spannungsumkehr an den Elektroden 12 und 13 des Überbrückungselementes 1, so wird an der elektronenleitenden Aussenfläche des Rohres 30 Sauerstoff der Luft ionisiert. Diese Sauerstoffionen wandern durch das Rohr 30 aus Zirkonoxid hindurch, in das Innere desselben. An der elektronenleitenden Innenfläche des Rohres 30 wird gasförmiger Sauerstoff gebildet. Dadurch entsteht innerhalb des Zirkonoxid-Rohres 30 ein Überdruck, der so lange ansteigt, bis die Aluminium-Scheibe 7, die relativ dünn ausgebildet ist und als Membran dient, bricht. Ist die zwischen dem Zylinder 2 und dem einseitig geschlossenen Rohr 3 bestehende Öffnung ebenfalls durch eine Membran (hier nicht dargestellt) verschlossen, so wird diese durch den im Rohr 30 erzeugten Überdruck ebenfalls zerstört. Durch den erzeugten Überdruck wird zusätzlich das innerhalb des Rohres 6 befindliche Natrium in den Raum 10 gedrückt, wo es die beiden Kontaktflächen 16 und 18 und damit die beiden Elektroden 12 und 13 des Überbrückungselementes 1 kurzschliesst.

Die Erfindung beschränkt sich nicht nur auf die oben beschriebenen Ausführungsbeispiele. Vielmehr umfasst sie alle Anordnungen, bei denen zwei Räume vorgesehen sind, die direkt aneinandergrenzend angeordnet sind, wobei der erste Raum mit einem flüssigen Metall oder einer zersetzbaren Metallverbindung gefüllt ist, und der zweite Raum die Kontaktflächen von mindestens zwei Elektroden aufweist, die bei Spannungsumkehr durch das aus dem ersten in den zweiten Raum wandernde geschmolzene Metall kurzgeschlossen werden.

**Patentansprüche**

1. Überbrückungselement (1) für eine elektrochemische Speicherzelle (20) oder eine Gruppe von mehreren parallel geschalteten Speicherzellen (20) mit mindestens einem ersten Raum (6) und einem zweiten Raum (10) für die Aufnahme von Natrium, welche durch eine alkaliionenleitende Wand voneinander getrennt sind, wobei jeder Raum (6, 10) mit mindestens einer Elektrode (12, 13) in Verbindung steht, die zum elektrischen Anschluss an die Speicherzelle(n) (20) vorgesehen ist, dadurch gekennzeichnet, dass die beiden Räume (6 und 10) durch zwei gleichlange an beiden Seiten durch je eine gemeinsame Aluminium- scheibe (4, 5) verschlossene Zylinder (2 und 3) aus Betaaluminiumoxid begrenzt sind, die unterschiedliche Durchmesser aufweisen und konzentrisch angeordnet sind, dass der erste Raum (6) mit Natrium gefüllt, durch die Aussenflächen des ersten Zylinders (3) und die Innenflächen des zweiten Zylinders (2) begrenzt und in seinem Inneren in definiertem Abstand von dem zweiten Zylinder (2) rundum mit einem Metallnetz (7) versehen ist, dass zwischen diesem Metallnetz (7) und dem zweiten Zylinder (2) ein Metallfilz (9) und/oder eine Metallwolle (9) angeordnet ist, dass das Metallnetz (7) über eine Durchführung (14) in der ersten Aluminiumoxidscheibe (4) mit der ersten Elektrode (12) elektrisch leitend in Verbindung steht, welche über eine zweite Durchführung (15) in der ersten Aluminiumscheibe (4) mit einer Kontaktfläche (16) im zweiten Raum (10) verbunden ist, dass die zweite Elektrode (13) über eine Durchführung (17) in der zweiten Aluminiumscheibe (5) an eine von einem Metallfilz (19) umgebene Kontaktfläche (18) im zweiten Raum (10) angeschlossen ist, und dass die beiden Kontaktflächen (16 und 18) der beiden Elektroden (12 und 13) in einem Abstand, der geringfügig kleiner als die Höhe des zweiten Raumes (10) ist, einander gegenüberliegend angeordnet sind.

2. Überbrückungselement (1) für eine elektrochemische Speicherzelle (20) oder eine Gruppe von mehreren parallel geschalteten Speicherzellen (20) mit mindestens einem ersten Raum (6) und einem zweiten Raum (10) für die Aufnahme von Natrium, welche durch eine alkaliionenleitende Wand voneinander getrennt sind, wobei jeder Raum (6, 10) mit mindestens einer Elektrode (12, 13) in Verbindung steht, die zum elektrischen Anschluss an die Speicherzelle(n) (20) vorgesehen ist, dadurch gekennzeichnet, dass die beiden Räume (6 und 10) durch zwei aneinandergrenzende Aluminiumzylinder (2 und 3), deren Längsachse in einer Ebene liegen, gebildet und durch eine runde Scheibe (4) aus Beta/Beta''-Aluminiumoxid voneinander getrennt sind, und gegen das zweite Ende des zweiten Raumes (10) eine Aluminiumoxidscheibe (5) mit einem mittigen Durchlass (5D) gesetzt ist, die nach aussenhin durch eine Aluminiumscheibe (7) verschlossen ist, dass die erste Elektrode (12) mit der äusseren Begrenzungsfläche des ersten Raumes (6) und der den zweiten Raum (10) verschliessenden Aluminiumscheibe (7) elektrisch leitend verbunden ist, dass die Kontaktfläche (16) der ersten Elektrode (12) mit der Aluminiumscheibe (7) leitend verbunden ist und durch den Durchlass (5D) der Aluminiumoxidscheibe (5) in den zweiten Raum (10) hineinragt, und die zweite Elektrode (13) mit dem den zweiten Raum (10) begrenzenden Aluminiumzylinder (3) elektrisch leitend verbunden ist, der die Kontaktfläche (18) der zweiten Elektrode (13) in dem zweiten Raum (10) bildet, und dass der erste Raum (6) mit Natrium gefüllt und innerhalb des zweiten Raumes (10) wenigstens bereichsweise eine Metallwolle (8) angeordnet ist, die sowohl mit der ionenleitenden Scheibe (4) als auch mit der metallischen Begrenzungsfläche des zweiten Raumes (10) elektrisch leitend in Verbindung steht.

3. Überbrückungselement (1) für eine elektrochemische Speicherzelle (20) oder eine Gruppe von mehreren parallel geschalteten Speicherzellen (20) mit mindestens einem ersten Raum (6) und einem zweiten Raum (10) für die Aufnahme eines bei 350 °C flüssigen Alkaliionenlieferanten, wobei jeder Raum (6, 10) mit mindestens einer Elektrode (12, 13) in Verbindung steht, die zum elektrischen Anschluss an die Speicherzelle(n) (20) vorgesehen ist, dadurch gekennzeichnet, dass der erste Raum (6) durch einen Zylinder (2) aus Beta/Beta''-Aluminiumoxid und der direkt angrenzende zweite Raum (10) durch ein einseitig geschlossenes Rohr (3) aus Aluminiumoxid begrenzt ist, deren Längsachsen in einer Ebene liegend angeordnet sind, und die Öffnung des zweiten Raums (10) dem ersten Raum (6) zugewandt ist, der mit einer bei 350 °C zersetzbaren Alkalimetallverbindung gefüllt und auf der dem zweiten Raum (10) zugewandten Seite einen nach innen weisenden Flansch (2F) besitzt, durch den sein Innenraum bereichsweise verschlossen ist, dass der Zylinder (2) durch eine dünne als Berstventil wirkende Aluminiumscheibe (7) verschlossen ist, gegen welche die Öffnung eines einseitig geschlossenen sauerstoffionenleitenden Rohres (30) aus Zirkonoxid gesetzt ist, auf dessen Aussen- und Innenflächen jeweils eine elektronenleitende Schicht (31) aufgetragen ist, dass die erste Elektrode (12) mit der elektronenleitenden äusseren Schicht (31) des Rohres (30) und mit einer in den zweiten Raum (10) hineinragenden Kontaktfläche (16) verbunden ist, und dass die zweite Elektrode (13) mit einer Kontaktfläche (33), die sich innerhalb des Zirkonoxidrohres (30) bis zur Aluminium-Scheibe (7) erstreckt und einer zweiten Kontaktfläche (18), die in den zweiten Raum (10) hineinragt, verbunden ist.

4. Überbrückungselement nach Anspruch 3, dadurch gekennzeichnet, dass die elektronenleitende Schicht (31) auf den Innen- und Aussenflächen des Rohres (30) aus Einbrennplatin oder Silber besteht.

**Claims**

1. Bridging element (1) for an electrochemical storage cell (20) or a group of several storage cells (20) connected in parallel, with at least one first space (6) and one second space (10) for receiving sodium, which spaces are separated from one another by an alkali ion-conducting wall, each space (6, 10) being connected to at least one electrode (12, 13) which is provided for an electrical connection to the storage cell(s) (20), characterized in that the two spaces (6 and 10) are bounded by two cylinders (2 and 3) of beta-alumina, which are of equal length and are sealed on both sides by in each case one common aluminium disc (4, 5) and which have different diameters and are concentrically arranged, that the first space (6) is filled with sodium, is bounded by the outer surfaces of the first cylinder (3) and the inner surfaces of the second cylinder (2) and is provided allround in its interior with a metal net (7) at a defined spacing from the second cylinder (2), that a metal felt (9) and/or metal wool (9) is arranged between this metal net (7) and the second cylinder (2), that the metal net (7) is electrically conductively connected through a bushing (14) in the first alumina disc (4) to the first electrode (12) which is connected via a second bushing (15) in the first alumina disc (4) to a contact surface (16) in the second space (10), that the second electrode (13) is connected via a bushing (17) in the second alumina disc (5) to a contact surface (18), surrounded by a metal felt (19) in the second space (10), and that the two contact surfaces (16 and 18) of the two electrodes (12 and 13) are arranged opposite one another at a distance which is slightly smaller than the height of the second space (10).

2. Bridging element (1) for an electrochemical storage cell (20) or a group of several storage cells (20) connected in parallel, with at least one first space (6) and one second space (10) to receive sodium, which spaces are separated from another by an alkali ion-conducting wall, each space (6, 10) being connected to at least one electrode (12, 13) which is provided for electrical connection to the storage cell(s) (20), characterized in that the two spaces (6 and 10) are formed by two mutually adjoining aluminium cylinders (2 and 3), the longitudinal axes of which lie in one plane, and are separated from another by a round disc (4) of beta/beta'' alumina, and an alumina disc (5) with a central bushing (5D) is placed against the second end of the second space (10), being sealed from the outside by an aluminium disc (7), that the first electrode (12) is electrically conductively connected to the outer boundary surface of the first space (6) and to the aluminium disc (7) sealing the second space (10), that the contact surface (16) of the first electrode (12) is conductively connected to the aluminium disc (7) and projects through the bushing (5D) of the alumina disc (5) into the second space (10), and the second electrode (13) is electrically conductively connected to the aluminium cylinder (3) which bounds the second space (10) and forms the contact surface (18) of the second electrode (13) in the second space (10), and that the first space (6) is filled with sodium and, within the second space (10) and at least zonally, metal wool (8) is provided which is electrically conductively connected to both the ion-conductive disc (4) and to the metallic boundary surface of the second space (10).

3. Bridging element (1) for an electrochemical storage cell (20) or a group of several storage cells (20) connected in parallel, with at least one first space (6) and one second space (10) for receiving an alkali metal ion donor which is liquid at 350 °C, each space (6, 10) being connected to at least one electrode (12, 13) which is provided for electrical connection to the storage cell(s) (20), characterized in that the first space (6) is bounded by a cylinder (2) of beta/beta'' alumina and the directly connected second space (10) is bounded by an alumina tube (3) which is closed on one side, the longitudinal axes being arranged to lie in one plane, and the opening of the second space (10) faces the first space (6) which is filled with an alkali metal compound, which can be decomposed at 350 °C, and has, on the side facing the second space (10), an inward-pointing flange (2F), by means of which its interior is zonally closed, that the cylinder (2) is sealed by a thin aluminium disc (7) which acts as a bursting valve, and against which the opening of an oxygen ion-conducting tube (30) of zirconia, closed on one side, is placed, an electron-conducting layer (31) being applied to each of its outer and inner surfaces, that the first electrode (12) is connected to the electron-conducting outer layer (31) of the tube (30) and to a contact surface (16) projecting into the second space (10), and that the second electrode (13) is connected to a contact surface (33), which extends within the zirconia tube (30) up to the aluminium disc (7), and to a second contact surface (18) which projects into the second space (10).

4. Bridging element according to Claim 3, characterized in that the electron-conducting layer (31) on the inner and outer surfaces of the tube (30) consists of burnt-in platinum or silver.

**Revendications**

1. Elément de shuntage (1) pour une cellule d'accumulateur électrochimique (20) ou un groupe de plusieurs telles cellules (20) montées en parallèle, comportant au moins un premier espace (6) et un deuxième espace (10) pour recevoir du sodium, lesquels sont séparés l'un de l'autre par une paroi conduisant les ions alcalins, chaque espace (6, 10) étant en communication avec au moins une électrode (12, 13) qui est prévue pour le raccordement électrique à la ou les cellules d'accumulateur (20), caractérisé par le fait que les deux espaces (6 et 10) sont délimités par deux cylindres en oxyde d'aluminium béta (2 et 3), ayant même longueur, fermés des deux côtés par une plaque d'oxyde d'aluminium commune (4, 5), ces cylindres présentant des diamètres différents et étant agencés concentriquement, par le fait que le premier espace (6) est rempli de sodium et est délimité par la surface extérieure du premier cylindre (3) et la surface intérieure du deuxième cylindre (2) et est muni, sur son pourtour intérieur, à une distance définie du deuxième cylindre (2), d'une grille métallique (7), par le fait qu'un feutre métallique (9) et/ou une laine métallique (9) est agencé entre cette grille métallique (7) et le deuxième cylindre (2), par le fait que, par une traversée (14) dans la première plaque d'oxyde d'aluminium (4), la grille métallique (7) est électriquement reliée à la première électrode (12) qui, par une deuxième traversée (15) dans la première plaque d'oxyde aluminium (4), est reliée à une surface de contact (16) dans le deuxième espace, par le fait que, par une traversée (17) dans la deuxième plaque d'oxyde d'aluminium (5), la deuxième électrode (13) est raccordée à une surface de contact (18) située dans le deuxième espace et entourée d'un feutre métallique (19) et par le fait que les deux surfaces de contact (16 et 18) des deux électrodes (12 et 13) sont agencées en vis-à-vis avec un intervalle légèrement plus petit que la hauteur du deuxième espace (10).

2. Elément de shuntage (1) pour une cellule d'accumulateur électrochimique (20) ou un groupe de plusieurs telles cellules (20) montées en parallèle, comportant au moins un premier espace (6) et un deuxième espace (10) pour recevoir du sodium, lesquels sont séparés l'un de l'autre par une paroi conduisant les ions alcalins, chaque espace (6, 10) étant en communication avec au moins une électrode (12, 13) qui est prévue pour le raccordement électrique à la ou les cellules d'accumulateur (20), caractérisé par le fait que les deux espaces (6 et 10) sont formés par deux cylindres d'aluminium voisins (2 et 3) dont les axes longitudinaux se trouvent dans un plan, et sont séparés l'un de l'autre par une plaque circulaire (4) en oxyde d'aluminium béta/béta″, une plaque d'oxyde d'aluminium (5) avec un passage central (5D) fermé vers l'extérieur par une plaque d'aluminium (7) étant disposée vers la deuxième extrémité du deuxième espace (10), par le fait que la première électrode (12) est électriquement reliée à la surface de délimitation extérieure du premier espace (6) et à la plaque d'aluminium (7) fermant le deuxième espace (10), par le fait que la surface de contact (16) de la première électrode (12) est électriquement reliée à la plaque d'aluminium (7) et pénètre dans le deuxième espace (10) par le passage (5D) de la plaque d'oxyde d'aluminium (5), la deuxième électrode (13) étant électriquement reliée au cylindre d'aluminium (3) qui délimite le deuxième espace (10) et qui forme la surface de contact (18) de la deuxième électrode (13) dans le deuxième espace (10), et par le fait que le premier espace (6) est rempli de sodium et, qu'à l'intérieur du deuxième espace (10) est disposée, au moins par zones, une laine métallique (8) qui est électriquement reliée aussi bien à la plaque (4) conduisant les ions qu'à la surface métallique de délimitation du deuxième espace (10).

3. Elément de shuntage (1) pour une cellule d'accumulateur électrochimique (20) ou un groupe de plusieurs telles cellules (20) montées en parallèle, comportant au moins un premier espace (6) et un deuxième espace (10) pour recevoir une matière liquide à 350 °C fournissant des ions alcalins, chaque espace (6, 10) étant en communication avec au moins une électrode (12, 13) prévue pour le raccordement électrique à la ou les cellules d'accumulateur (20), caractérisé par le fait que le premier espace (6) est délimité par un cylindre (2) en oxyde d'aluminium béta/béta″ et le deuxième espace (10), immédiatement adjacent, est délimité par un tube en oxyde d'aluminium (3) qui est fermé d'un côté, leurs axes longitudinaux étant disposés dans un plan, et l'ouverture du deuxième espace (10) étant tournée vers le premier espace (6) qui est rempli d'un composé de métal alcalin décomposable à 350 °C et qui possède, du côté en regard du deuxième espace (10), un collet (2F) formant un relief interne, par lequel l'intérieur de cet espace est fermé en partie, par le fait que le cylindre (2) est fermé par une mince plaque d'aluminium (7) faisant office de soupape à membrane de rupture, contre laquelle est disposé l'orifice d'un tube (3) qui est en oxyde de zirconium, conduisant les ions oxygène, qui est fermé d'un côté, une couche (31) conductrice d'électrons étant appliquée sur les surfaces extérieure et intérieure de ce tube, par le fait que la première électrode (12) est reliée à la couche extérieure (31) conductrice d'électrons du tube (30) et à une surface de contact (16) pénétrant dans le deuxième espace (10), et par le fait que la deuxième électrode (13) est reliée à une surface de contact (33) s'étendant à l'intérieur du tube en oxyde de zirconium (30), jusqu'à la plaque d'aluminium (7), et est reliée à une deuxième surface de contact (18) qui pénètre dans le deuxième espace (10).

4. Elément de shuntage selon revendication 3, caractérisé par le fait que la couche (31) conductrice d'électrons sur les surfaces intérieure et extérieure du tube (30) est en argent ou platine.

# Fig.1

# Fig.2

0 064 655

Fig.3

Fig.4

0 064 655